# EUROPEAN PATENT APPLICATION

(11) **EP 0 890 479 A1**
(43) Date of publication of application: **13.01.1999**
(21) Application number: 98304205.2
(22) Date of filing: 28.05.1998
(51) Int. Cl.: B60R 7/04

(54) **A stowage unit for a vehicle**

(30) Priority: 09.07.1997 GB 9714379; 01.05.1998 GB 9809247
(71) Applicant: ROVER GROUP LIMITED, Warwick, Warwickshire CV34 6RG (GB)
(72) Inventor: Iles, Adrian Trevor, Warwickshire, CV11 4XZ (GB)
(74) Representative: Parnham, Kevin

(57) **Abstract**

A stowage unit (24) for a vehicle is disclosed which comprises a one piece plastics moulding having a series of walls (28, 30, 32, 34) which define a substantially D-shaped hollow compartment (26) used to store a pair of sunglasses (44). The stowage unit (24) is attached to the windscreen (12) between the rear view mirror (22) and the upper edge (16) of the windscreen (12), thereby providing sunlight obscuration in the region of the rear view mirror (22).

## Description

This invention relates to stowage units for vehicles and in particular to a stowage unit provided to function as a sunlight obscuration means for a vehicle.

It is known to provide a sunlight obstruction means for a vehicle to protect the driver from direct exposure to sunlight entering the passenger compartment through the windscreen.

Two known forms of sunlight obscuration means are sun visors and a shaded obscuration band, which effect sunlight obscuration individually or in combination along the upper edge of a vehicle windscreen.

It is a problem with such prior art arrangements that, when a rear view mirror is attached to the windscreen, it is difficult to provide obscuration in the region of the mirror. It is then necessary to provide a pair of specially profiled sun visors or a complex obscuration band to compensate for intrusion of sunlight in the region of the rear view mirror.

It is an object of this invention to provide an improved stowage unit that can function as a sunlight obscuration means for a vehicle.

In accordance with the present invention there is provided a stowage unit for a vehicle, the unit comprising walls which define a stowage compartment accessible through an aperture formed in one of the walls, the unit being arranged, in use, for attachment to a vehicle with said unit having an inclined and/or depressed perspective to facilitate article retention therein. Furthermore, the unit may also provide sunlight obscuration within the vehicle with regard to a rear view mirror region thereof.

According to a further aspect of the invention there is provided a stowage unit for a vehicle, the unit comprising walls which define a stowage compartment accessible through an aperture formed in one of the walls, the unit being attached to the vehicle and positioned in the region of a rear view mirror thereof so as to function as a sunlight obscuration means.

The unit may be positioned on the front windscreen of the vehicle between the rear view mirror and the upper edge of the windscreen.

The unit may be attached directly to the windscreen or to a roof lining of the passenger compartment in the region of the rear view mirror or may be attached to the rear view mirror.

The unit may comprise a plastics moulding and may be attached by an adhesive fixing means, a mechanical fixing means or by a combination of said fixing means.

The unit may be adapted for stowage of at least one pair of spectacles.

The stowage unit may be formed as an integral part of the rear view mirror assembly.

The invention also provides a vehicle having a stowage unit according to the invention.

The invention will now be described by way of example with reference to the accompanying drawings, in which:
- Fig. 1: is an isometric view of a stowage unit according to the invention positioned in a passenger compartment of a vehicle; and

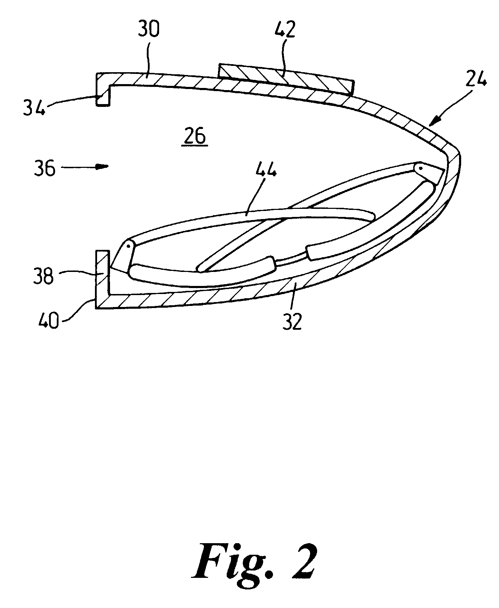

- Fig. 2: is a section through the stowage unit of Figure 1 along the line A to A.

Referring to the Figures, a passenger compartment 10 of a vehicle (not shown further) comprises a front windscreen 12 fixed to the vehicle body shell and a trim panel in the form of a roof lining 14 extending rearwardly from an upper edge 16 of the windscreen 12. A pair of sun visors 18 are attached to the roof lining 14 in a conventional manner.

A semi-opaque sunlight obscuration band in the form of a shade band 20 extends across the width of the upper part of the windscreen 12 and extends downwardly from the upper edge 16. A rear view mirror assembly 22 having a plastic housing in which is mounted a mirror is attached to the interior of the windscreen 12 a short distance below the shade band 20 by an adhesive mounting means (not shown).

A stowage unit 24 is positioned on the interior of the windscreen 12 between the rear view mirror 22 and the upper edge 16 of the windscreen 12.

The stowage unit 24 is not an integral part of the vehicle structure but is directly attached to the windscreen 12 by a piece of double sided adhesive foam 42 of a type similar to that used to attach the rear view mirror 22 to the windscreen 12.

The stowage unit 24 comprises a one piece plastics moulding which defines a hollow compartment 26 substantially D-shaped in cross-section, formed by a pair of end walls 28, an upper wall 30, a lower wall 32 and a front wall 34.

The front wall 34 has an opening 36 in it to allow articles to be placed in or removed from the stowage unit 24. The front wall 34 has a raised lip 38 defining the lower edge of the opening 36 and which extends upwardly from its own lower edge 40 to prevent articles, such as a pair of sunglasses 44, placed within the compartment 26 from sliding or rolling out.

The provision of a stowage unit 24 in the area between the rear view mirror 22 and the upper edge 16 of the windscreen 12 provides sunlight obscuration in the region of the windscreen 12 around the rear view mirror 22 so that it is not necessary to provide either a dip down of the shade band 20 or specially formed sun visors 18 to effect such obscuration.

Other attachment means, such as an adhesive, could be used to attach the stowage unit 24 to the windscreen 12.

It will also be appreciated that the stowage unit 24 could be attached to the headlining 14 adjacent to the mirror 22 using either an adhesive mounting means such as the double sided adhesive foam 42 or some form of mechanical fixing. Alternatively the stowage unit 24 could be attached to the upper edge of the rear view mirror 22 itself.

It will further be appreciated that the housing used for the mirror could be formed with such a stowage unit so that the stowage unit is formed as an integral part of the mirror assembly.

The stowage unit 24 could be fitted during manufacture of the vehicle itself or could be supplied for fitting as an after sales accessory.

As indicated above, the stowage unit 24 preferably has a D-shaped cross-section. Such a cross-section facilitates sunlight obscuration particularly with regard to divergent windscreen and vehicle roof sections. However, it will also be appreciated that it is advantageous that the lower wall 32 has a depressed or inclined perspective when secured within a vehicle. Thus, in use, any articles located within the unit 24 will then be urged towards the closed end of the unit rather than the opening 36. In such circumstances, the unit 24 by combination of raised lip 38 and depressed and/or inclined perspective, good article retention is achieved.

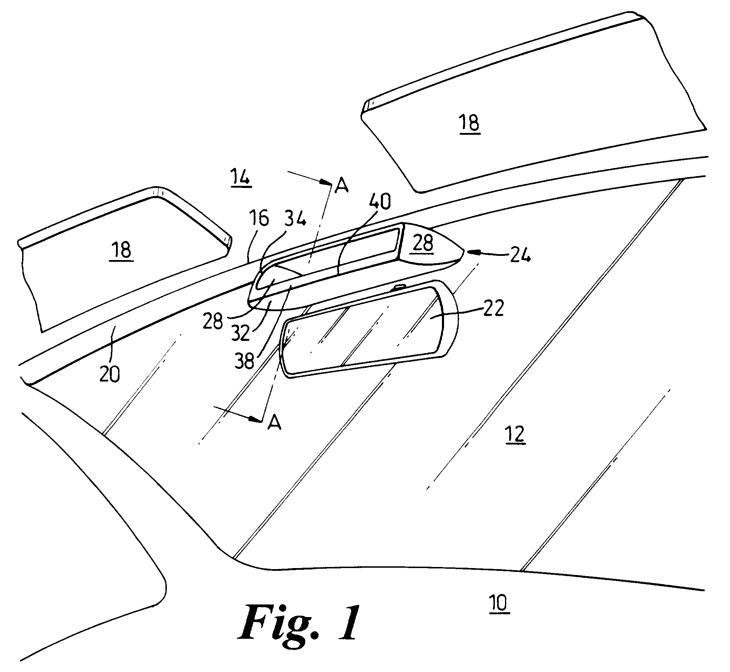

A depressed perspective to the unit 24 can be achieved as illustrated in Figure 1 by appropriate shaping of end walls 28. Thus, for a depressed perspective, these end walls 28 will present a curved edge to which the lower wall 32 is secured and configured. Furthermore, the wall 32 may be ribbed or corrugated for further grip retention with articles stowed in the unit 24. These ribs or corrugations may be achieved through undulations in the curved edge to which the lower wall 32 is secured or simply through appropriate moulding of the wall 32.

An inclined perspective to the unit 24 can be achieved with appropriate choice of fixing position. Thus. in the embodiment described above, the foam fixing 42 is secured to the windscreen 12 to provide an inclined upward perspective for the unit 24 as shown in Figure 1. It will be appreciated that, if the upper wall 30 is curved as depicted in the drawing, then the location of that fixing 42 on that curve will allow a range of presentations of the unit 24 in inclined perspectives and to suit vehicle geometry or occupant preference. For example, if the fixing 42 is secured to the relatively flat central portion of the wall 30, then the unit 24 will be substantially flat and parallel to any surface to which the fixing is secured, whilst, if the fixing 42 is secured on the sloped portions of a curve either side of this central portion, then the unit 24 will be similarly inclined when the fixing 42 is secured to a surface.

Typically, an inclination or depression of only a few millimetres may be sufficient to achieve article retention against the inherent jostling during normal vehicle travel. Furthermore, the angle of inclination of the unit 24 by appropriate hinge mounting may be altered as required. In such circumstances, the hinge mounting will be lockable in specific or over a range of angles of inclination.

## Claims

1. A stowage unit for a vehicle, the unit comprising walls which define a stowage compartment accessible through an aperture formed in one of the walls, the unit being attached to the vehicle and positioned in the region of a rear view mirror thereof so as to function as a sunlight obscuration means.

2. A stowage unit for a vehicle and in particular to facilitate sunlight obscuration within such a vehicle, the unit comprising walls which define a stowage compartment accessible through an aperture formed in one of the walls, the unit being arranged, in use, for attachment to a vehicle with said unit having an inclined and/or depressed perspective to facilitate article retention therein.

3. A stowage unit according to Claim 1 or Claim 2, wherein the unit is positioned on the front windscreen of the vehicle between the rear view mirror and the upper edge of the windscreen.

4. A stowage unit according to any of Claims 1, 2 or 3, wherein the unit is attached to a roof lining of the passenger compartment in the region of the rear view mirror.

5. A stowage unit according to any preceding claim, wherein the unit is attached to a rear view mirror.

6. A stowage unit according to any preceding claim comprising a plastics moulding.

7. A stowage unit according to any preceding claim adapted for stowage of at least one pair of spectacles.

8. A stowage unit according to any preceding claim, wherein the stowage unit is formed as an integral part of a rear view mirror assembly.

9. A stowage unit substantially as described herein with reference to the accompanying drawings.

10. A vehicle having a stowage unit according to any preceding claim.
